(19) **Europäisches Patentamt / European Patent Office / Office européen des brevets**

(11) **EP 4 703 772 A1**

(12) **EUROPEAN PATENT APPLICATION**
published in accordance with Art. 153(4) EPC

(43) Date of publication:
04.03.2026 Bulletin 2026/10

(21) Application number: 23954037.0

(22) Date of filing: 13.12.2023

(51) International Patent Classification (IPC):
*G01V 1/36* (2006.01) *G01V 1/30* (2006.01)

(52) Cooperative Patent Classification (CPC):
G01V 1/30; G01V 1/36

(86) International application number:
PCT/CN2023/138598

(87) International publication number:
WO 2025/065905 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.09.2023 CN 202311250445

(71) Applicants:
• China National Petroleum Corporation
Beijing 100007 (CN)
• BGP Inc., China National Petroleum Corporation
Hebei 072751 (CN)
• CNPC Exploration Software Co., Ltd
Beijing 100080 (CN)

(72) Inventors:
• HE, Huili
Baoding, Hebei 072751 (CN)
• CHEN, Feng
Baoding, Hebei 072751 (CN)
• HAN, Weishan
Baoding, Hebei 072751 (CN)
• DUAN, Lian
Baoding, Hebei 072751 (CN)
• ZHANG, Yu
Baoding, Hebei 072751 (CN)
• JING, Hongliang
Baoding, Hebei 072751 (CN)

(74) Representative: Ström & Gulliksson AB
P.O. Box 4188
203 13 Malmö (SE)

(54) **FREQUENCY EXPANSION METHOD AND APPARATUS BASED ON FAST SPARSE INVERSION, AND READABLE STORAGE MEDIUM**

(57) The present invention relates to the technical field of seismic data processing, and provides a frequency expansion method and apparatus based on fast sparse inversion, and a readable storage medium. The method comprises: acquiring pre-stack seismic data; filtering the pre-stack seismic data by using a filter operator to obtain filtered pre-stack seismic data; performing Fourier transform on the filtered pre-stack seismic data to obtain transformed pre-stack seismic data; on the basis of the filtered pre-stack seismic data and a sparse inversion algorithm, constructing a frequency inversion objective function by taking the transformed pre-stack seismic data as a constraint condition; and iterating the frequency inversion objective function by using a Lagrange multiplier method, updating the filtered pre-stack seismic data until the update amount of the updated filtered pre-stack seismic data is smaller than a preset update threshold or the number of iterations reaches a preset iteration threshold, and outputting the updated filtered pre-stack seismic data. The method has the advantages of high frequency inversion precision and a high data signal-to-noise ratio, a reduced calculation amount in a data processing process, and a reduced calculation cost.

FIG. 1

EP 4 703 772 A1

**Description**

**Field of the Invention**

The present disclosure relates to the technical field of seismic data process, and in particular to a frequency expansion method based on fast sparse inversion, a frequency expansion apparatus based on fast sparse inversion, an electronic device, and a readable storage medium.

**Background of the Invention**

In a process of land seismic data acquisition, lower-frequency components of the collected seismic data are generally lost due to a land filtering effect, limitation of an artificial seismic source itself, and interference of geophone distortion and surface waves. During process of marine data, lower-frequency information and partial higher-frequency information of the data are missed due to a lack of lower-frequency components of the seismic source and lower-frequency response of a geophone and interference of a ghost wave effect. The lack of lower-frequency components is likely to cause a local minimum in a full waveform inversion result, and thus dramatically reduces precision of process and interpretation of a seismic signal. The lack of higher-frequency components also reduces a resolution of the process. Thus, to improve a quality of subsequent process of data, it is a pressing issue to provide a novel technology to perform lower-frequency and higher-frequency continuation on seismic data.

**Summary of the Invention**

An objective of embodiments of the present disclosure is to provide a frequency expansion method and apparatus based on fast sparse inversion, and a readable storage medium, to at least solve the above problems that a lack of lower-frequency components in seismic data is likely to cause a local minimum in a full waveform inversion result, and thus dramatically reduces precision of process and interpretation of a seismic signal and that a lack of higher-frequency components also reduces a resolution of the process.

To achieve the above objective, in a first aspect, the present disclosure provides a frequency expansion method based on fast sparse inversion. The method includes:

acquiring pre-stack seismic data;
filtering, by a pre-constructed filtering operator, the pre-stack seismic data, and obtaining filtered pre-stack seismic data;
performing Fourier transform on the filtered pre-stack seismic data, and obtaining transformed pre-stack seismic data;
constructing a frequency inversion objective function based on the filtered pre-stack seismic data and a sparse inversion algorithm, with the transformed pre-stack seismic data as constraint conditions; and
iteratively solving the frequency inversion objective function through a Lagrange multiplier method, updating the filtered pre-stack seismic data until an amount of updates of updated filtered pre-stack seismic data is less than a preset update threshold or a number of iterations reaches a preset iteration threshold, and outputting the updated filtered pre-stack seismic data as frequency-expanded pre-stack seismic data.

Optionally, before the filtering, by a pre-constructed filtering operator, the pre-stack seismic data, and obtaining filtered pre-stack seismic data, the method further includes:

constructing the filtering operator based on an effective band of the pre-stack seismic data, a band where a noise is located, and a band to be inverted;
wherein an expression of the filtering operator is as follows:

$$M(f) = \begin{cases} 1 & f \text{ denotes a frequency where a signal is located} \\ 0 & f \text{ denotes a frequency where a noise is located} \end{cases}.$$

Optionally, the performing Fourier transform on the filtered pre-stack seismic data, and obtaining transformed pre-stack seismic data include:

obtaining the transformed pre-stack seismic data according to a calculation formula as follows:

$$b[k] = \sum_{n=0}^{N-1} d[n] e^{-j\left(\frac{2\pi}{N}\right)kn} \;;$$

wherein, $b[k]$ denotes the transformed pre-stack seismic data, $d[n]$ denotes the filtered pre-stack seismic data, $n$ denotes a serial number of a seismic data sampling point in time, $j$ denotes an imaginary unit, $k$ denotes a serial number of the seismic data in a frequency domain, and $0 \le k \le N-1$.

Optionally, an L1 sparse inversion algorithm serves as the sparse inversion algorithm; and a dual augmented Lagrange multiplier method serves as the Lagrange multiplier method.

Optionally, an expression of the frequency inversion objective function is as follows:

$$J(x) = \min_{D} \|D\|_1 \;;$$

wherein, $J(x)$ denotes the frequency inversion objective function, and $D$ denotes a data matrix of the filtered pre-stack seismic data.

Optionally, the constraint conditions of the frequency inversion objective function are as follows:

$$A * D = B \;;$$

$$A = \begin{bmatrix} 1 & 1 & \cdots & 1 \\ 1 & e^{-j\left(\frac{2\pi}{N}\right)} & \cdots & e^{-(N-1)j\left(\frac{2\pi}{N}\right)} \\ \vdots & \vdots & \ddots & \vdots \\ 1 & e^{-(N-1)j\left(\frac{2\pi}{N}\right)} & \cdots & e^{-(N-1)(N-1)j\left(\frac{2\pi}{N}\right)} \end{bmatrix} \;;$$

$$D = \begin{bmatrix} d[0] & d[1] & \ldots & d[N-1] \end{bmatrix} \;;$$

and

$$B = \begin{bmatrix} b[0] & b[1] & \ldots & b[N-1] \end{bmatrix} \;;$$

wherein, $A$ denotes a discrete Fourier transform matrix, $D$ denotes a data matrix of the filtered pre-stack seismic data, $B$ denotes a data matrix of the pre-stack seismic data after the Fourier transform, and $j$ denotes an imaginary unit.

Optionally, the filtered pre-stack seismic data are updated according to a formula as follows:

$$\begin{cases} D^{(m)} = D^{(m-1)} - \beta \left[ sign\left(u + \frac{D^{(m-1)}}{\beta}\right) * \min\left(1, \left|u + \frac{D^{(m-1)}}{\beta}\right|\right) - IFFT\left[FFT\left[sign\left(u + \frac{D^{(m-1)}}{\beta}\right) * \min\left(1, \left|u + \frac{D^{(m-1)}}{\beta}\right|\right)\right] - \frac{D^{(m-1)}}{\beta} + \frac{B}{\beta}\right]\right] \\ \beta = \alpha \cdot \frac{\|B\|_1}{O(N)} \end{cases} \;;$$

wherein, $D^{(m)}$ denotes a data matrix of filtered pre-stack seismic data after an m-th iteration, $\beta$ denotes a sparse inversion parameter, $u$ denotes a preset vector, $D^{(m-1)}$ denotes a data matrix of filtered pre-stack seismic data after an (m-1)th iteration, $sign\left(u + \frac{D^{(m-1)}}{\beta}\right) * \min\left(1, \left|u + \frac{D^{(m-1)}}{\beta}\right|\right)$ denotes that all values greater than 1 in $u + \frac{D^{(m-1)}}{\beta}$ $\beta$ are set as 1, $IFFT()$ denotes inverse Fourier transform, $FFT()$ denotes Fourier transform, $\alpha$ denotes a fitting parameter, $\alpha < 1$, $B$ denotes a data matrix of the transformed pre-stack seismic data, $N$ denotes a latitude of the pre-stack seismic data, and $O(N)$ denotes a constant.

In a second aspect, the present disclosure provides a frequency expansion apparatus based on fast sparse inversion. The apparatus includes:

a data acquisition module configured to acquire pre-stack seismic data;
a data filtering module configured to filter, by a pre-constructed filtering operator, the pre-stack seismic data and obtain filtered pre-stack seismic data;
a Fourier transform module configured to perform Fourier transform on the filtered pre-stack seismic data and obtain transformed pre-stack seismic data;
an objective function construction module configured to construct a frequency inversion objective function based on the filtered pre-stack seismic data and a sparse inversion algorithm, with the transformed pre-stack seismic data as constraint conditions; and
a frequency expansion module configured to iteratively solve the frequency inversion objective function through a Lagrange multiplier method, update the filtered pre-stack seismic data until an amount of updates of updated filtered pre-stack seismic data is less than a preset update threshold or a number of iterations reaches a preset iteration threshold, and output the updated filtered pre-stack seismic data as frequency-expanded pre-stack seismic data.

In a third aspect, the present disclosure provides an electronic device. The electronic device includes a memory, a processor, and a computer program stored in the memory and runnable on the processor, wherein the processor, when executing the computer program, implements the above frequency expansion method based on fast sparse inversion.

In another aspect, the present disclosure further provides a readable storage medium. The readable storage medium stores instructions, wherein the instructions are configured to cause a machine to perform the above frequency expansion method based on fast sparse inversion.

According to the technical solution, a missing frequency of the data can be continued on the premise of keeping original frequency components of the data unchanged. Precision of frequency inversion and a signal-to-noise ratio of the data can be high, an amount of calculation in a process of data process can be reduced, and a calculation cost can be reduced.

Other features and advantages in the embodiments of the present disclosure will be described in detail in the following particular embodiments.

## Brief Description of Drawings

The accompanying drawings, used to provide further understanding of embodiments of the present disclosure, constitute part of the description, and serve to explain the embodiments of the present disclosure along with the following particular embodiments, instead of limiting the embodiments of the present disclosure. In the figures:

FIG. 1 is a schematic flowchart of a frequency expansion method based on fast sparse inversion according to the present disclosure;
FIG. 2 is a schematic diagram of pre-stack data and its spectrum according to the present disclosure;
FIG. 3 is a schematic diagram of pre-stack data after inversion and its spectrum according to the present disclosure;
FIG. 4 is a schematic diagram of noisy pre-stack data and its spectrum according to the present disclosure;
FIG. 5 is a schematic diagram of noise band-supplemented pre-stack data and its spectrum according to the present disclosure;
FIG. 6 is a schematic diagram of single-shot model data and its spectrum according to the present disclosure;
FIG. 7 is a schematic diagram of filtered single-shot model data and its spectrum according to the present disclosure;
FIG. 8 is a schematic diagram of frequency-expanded single-shot model data and its spectrum according to the present disclosure;
FIG. 9 is a schematic diagram of a comparison between a lower-frequency component of original data according to the present disclosure and a continued lower-frequency component according to the solution; and
FIG. 10 is a schematic structural diagram of a frequency expansion apparatus based on fast sparse inversion according to an embodiment of the present disclosure.

Reference Numerals

10-data acquisition module; 20-data filtering module; 30-Fourier transform module;
40-objective function construction module; and 50-frequency expansion module.

**Detailed Description of the Embodiments**

Particular embodiments of the present disclosure are described in detail below in combination with the accompanying drawings. It should be understood that the particular embodiments described herein are merely to illustrate and explain the present disclosure, and are not intended to limit the present disclosure.

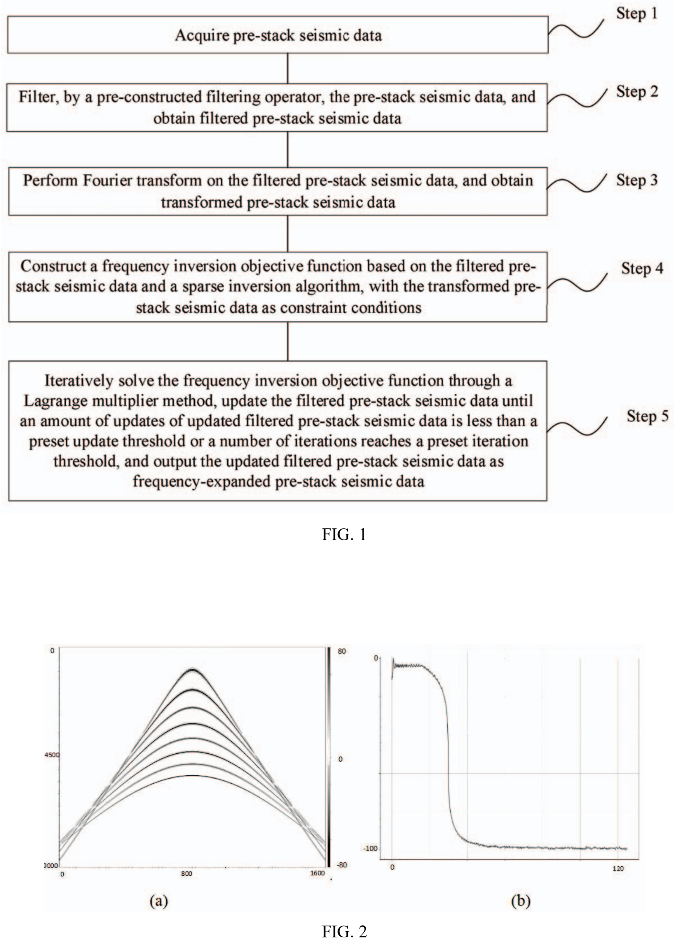

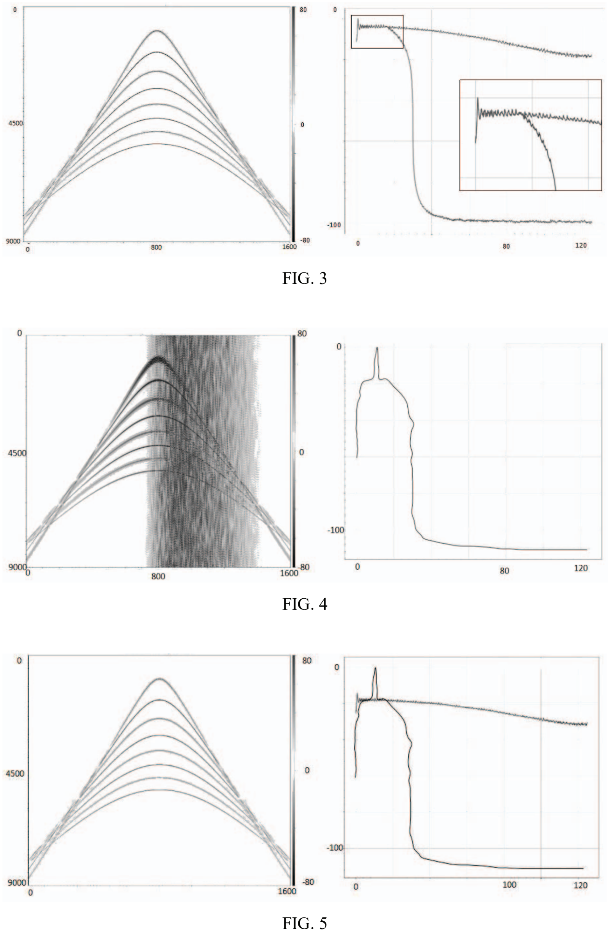

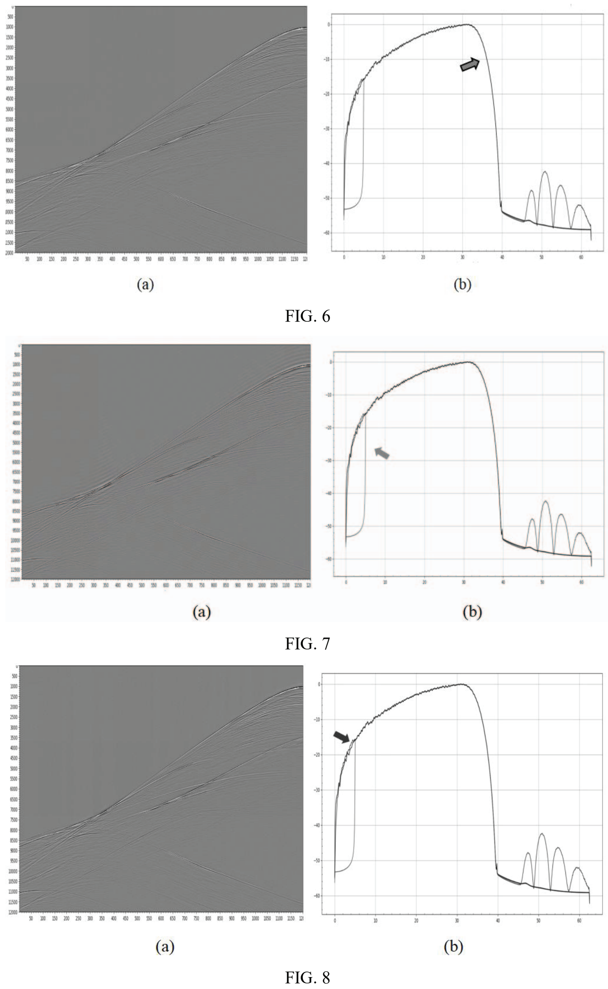

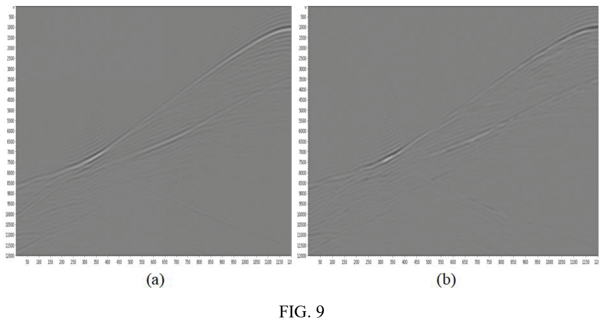

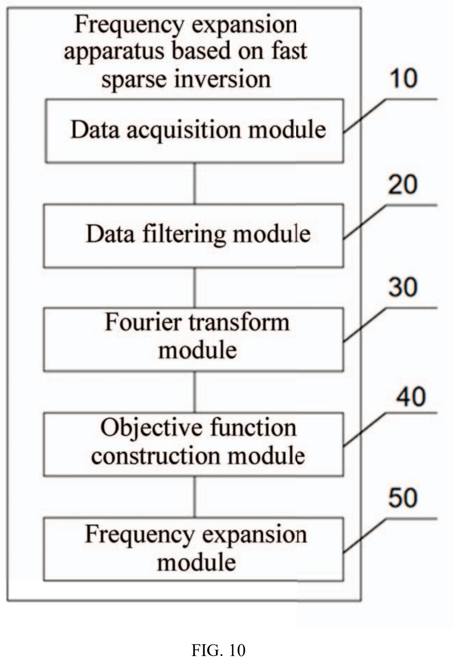

FIG. 1 is a flowchart of a frequency expansion method based on fast sparse inversion according to the present disclosure. FIG. 2 is a schematic diagram of pre-stack data and its spectrum according to the present disclosure. FIG. 3 is a schematic diagram of pre-stack data after inversion and its spectrum according to the present disclosure. FIG. 4 is a schematic diagram of noisy pre-stack data and its spectrum according to the present disclosure. FIG. 5 is a schematic diagram of noise band-supplemented pre-stack data and its spectrum according to the present disclosure. FIG. 6 is a schematic diagram of single-shot model data and its spectrum according to the present disclosure. FIG. 7 is a schematic diagram of filtered single-shot model data and its spectrum according to the present disclosure. FIG. 8 is a schematic diagram of frequency-expanded single-shot model data and its spectrum according to the present disclosure. FIG. 9 is a schematic diagram of a comparison between a lower-frequency component of original data according to the present disclosure and a continued lower-frequency component according to the solution. FIG. 10 is a schematic structural diagram of a frequency expansion apparatus based on fast sparse inversion according to an embodiment of the present disclosure.

As shown in FIG. 1, a frequency expansion method based on fast sparse inversion is provided in the embodiments of the present disclosure. The method includes:

Step 1, pre-stack seismic data are acquired.

Specifically, in the example, as shown in FIG. 2(a), the pre-stack seismic data indicate original seismic record data acquired in seismic prospecting. These data are obtained by sending, by a seismic instrument, a subsurface seismic source signal and then receiving signals reflected and refracted by subsurface rocks. The pre-stack seismic data, with reflection and refraction information of the subsurface rocks, may be configured to research underground structures, lithology, and distribution of oil and gas resources. Process of the pre-stack seismic data is one important step in seismic prospecting. In a process of the process, first, the original data need to be denoised, to remove noise interference from the signal. Then, time interval conversion needs to be performed, to convert time information in a seismic record into subsurface depth information. Next, stacking needs to be performed, so that the strength of subsurface reflection information is enhanced by stacking a plurality of seismic records. Finally, velocity modeling and migration also need to be performed, to obtain more accurate subsurface structure information. Through the process of the pre-stack seismic data, seismic prospectors can obtain the detailed subsurface structure information, which provides the important basis for oil and gas prospecting and geological disaster prediction. Moreover, the pre-stack seismic data may also be configured for seismic research and monitoring, which is conducive to understanding of the rule and trend of seismic activities and improvement of accuracy of seismic pre-warning.

Step 2: the pre-stack seismic data are filtered by a pre-constructed filtering operator, and filtered pre-stack seismic data are obtained.

In the example, the filtering operator is constructed based on an effective band of the pre-stack seismic data, a band where a noise is located, and a band to be inverted. Denoising is performed through the filtering operator, which acts on frequency-domain data to filter out the band containing the noise in the data and suppress an abnormal-energy noise. Thus, precision of the data is ensured. A frequency value where an effective signal is located is set as 1, and a frequency portion where the noise is located is set to 0. An expression of the filtering operator is as follows:

$$M(f) = \begin{cases} 1 & f \text{ denotes a frequency where a signal is located} \\ 0 & f \text{ denotes a frequency where a noise is located} \end{cases}.$$

Step 3, Fourier transform is performed on the filtered pre-stack seismic data, and transformed pre-stack seismic data are obtained.

In the example, the transformed pre-stack seismic data are obtained according to a calculation formula as follows:

$$b[k] = \sum_{n=0}^{N-1} d[n] e^{-j\left(\frac{2\pi}{N}\right)kn};$$

wherein, $b[k]$ denotes the transformed pre-stack seismic data, a spectrum of the transformed pre-stack seismic data is shown in FIG. 2(b), $d[n]$ denotes the filtered pre-stack seismic data, as shown in FIG. 2(a), $n$ denotes a serial number of a seismic data sampling point in time, $j$ denotes an imaginary unit, $k$ denotes a serial number of the seismic data in a frequency domain, and $0 \le k \le N\text{-}1$.

Step 4, a frequency inversion objective function is constructed based on the filtered pre-stack seismic data and a sparse inversion algorithm, with the transformed pre-stack seismic data as constraint conditions.

In the embodiment, an L1 sparse inversion algorithm serves as the sparse inversion algorithm, and has the advantages of high precision of inversion, low multiplicity of solutions, and low requirements on a number and distribution uniformity of well logging.

An expression of the frequency inversion objective function is as follows:

$$J(x) = \min_{D} \|D\|_1 \; ;$$

wherein, $J(x)$ denotes the frequency inversion objective function, and $D$ denotes a data matrix of the filtered pre-stack seismic data.

Through the above method, a minimum solution of an L1 norm of the original data is acquired. To be specific, a sparsest solution of data D is acquired to invert a missing frequency of the data. When the data D are sparser, a waveform of the seismic record is closer to a unit pulse, and a band of the data is wider.

In the example, the constraint conditions of the frequency inversion objective function are as follows:

$$A * D = B \; ;$$

$$A = \begin{bmatrix} 1 & 1 & \cdots & 1 \\ 1 & e^{-j(\frac{2\pi}{N})} & \cdots & e^{-(N-1)j(\frac{2\pi}{N})} \\ \vdots & \vdots & \ddots & \vdots \\ 1 & e^{-(N-1)j(\frac{2\pi}{N})} & \cdots & e^{-(N-1)(N-1)j(\frac{2\pi}{N})} \end{bmatrix} \; ;$$

$$D = \begin{bmatrix} d[0] & d[1] & \dots & d[N-1] \end{bmatrix} \; ;$$

and

$$B = \begin{bmatrix} b[0] & b[1] & \dots & b[N-1] \end{bmatrix} \; ;$$

wherein, $A$ denotes a discrete Fourier transform matrix, calculation complexity can be decreased from $N^2$ to $N\log(N)$ through fast Fourier transform, an amount of calculation can be reduced, and calculation efficiency can be improved, $D$ denotes a data matrix of the filtered pre-stack seismic data, $B$ denotes a data matrix of the pre-stack seismic data after the Fourier transform, $b[k]$ denotes the transformed pre-stack seismic data, $d[n]$ denotes the filtered pre-stack seismic data, $n$ denotes a serial number of a seismic data sampling point in time, and $j$ denotes an imaginary unit.

Specifically, with $A * D = B$ as the constraint condition of the frequency inversion objective function, it is ensured that an effective frequency of the original data conforms to a relation between Fourier transform and inverse Fourier transform, and the signal of the original data is unchanged.

Step 5, the frequency inversion objective function is iteratively solved through a Lagrange multiplier method, the filtered pre-stack seismic data are updated until an amount of updates of updated filtered pre-stack seismic data is less than a preset update threshold or a number of iterations reaches a preset iteration threshold, and the updated filtered pre-stack seismic data are output as frequency-expanded pre-stack seismic data.

Specifically, in the example, a dual augmented Lagrange multiplier method serves as the Lagrange multiplier method. A plurality of methods for $L_1$ inversion are available in the prior art. The augmented Lagrange method (ALM) has become a popular choice due to its robustness and a lower calculation cost per iteration. However, the ALM usually requires a greater number of iterations to converge. On the contrary, the dual augmented Lagrange method (DALM) requires a smaller number of iterations to converge, but has a higher cost because of matrix inversion.

Also, the filtered pre-stack seismic data are updated according to a calculation formula as follows:

$$\begin{cases} D^{(m)} = D^{(m-1)} - \beta \left[ sign(u + \frac{D^{(m-1)}}{\beta}) * \min\left(1, \left|u + \frac{D^{(m-1)}}{\beta}\right|\right) - IFFT\left[FFT\left[sign(u + \frac{D^{(m-1)}}{\beta}) * \min\left(1, \left|u + \frac{D^{(m-1)}}{\beta}\right|\right) - \frac{D^{(m-1)}}{\beta}\right] + \frac{B}{\beta}\right]\right] \\ \beta = \alpha \cdot \frac{\|B\|_1}{O(N)} \end{cases} ;$$

wherein, $D^{(m)}$ denotes a data matrix of filtered pre-stack seismic data after an m-th iteration, $\beta$ denotes a sparse inversion parameter, $u$ denotes a preset vector, $D^{(m-1)}$ denotes a data matrix of filtered pre-stack seismic data after an $(m\text{-}1)$-th

iteration, $sign(u + \frac{D^{(m-1)}}{\beta}) * \min\left(1, \left|u + \frac{D^{(m-1)}}{\beta}\right|\right)$ denotes that all values greater than 1 in $u + \frac{D^{(m-1)}}{\beta}$ are set as

1 and an original symbol is retained, $IFFT()$ denotes inverse Fourier transform, $FFT()$ denotes Fourier transform, $\alpha$ denotes a fitting parameter, $\alpha < 1$, $B$ denotes a data matrix of the transformed pre-stack seismic data, $N$ denotes a latitude of the pre-stack seismic data, and $O(N)$ denotes a constant.

Through the above solution, a calculation cost of the DALM L1 inversion is significantly reduced on the premise of ensuring precision of frequency inversion. Thus, the noise frequency in the data is eliminated, and the missing frequency is inversed based on the L1 time-domain sparsity. It can also be clearly seen from three instances according to the present disclosure that when the data satisfy the time-domain sparsity assumption, the missing frequency of the data can be better continued. When the frequency inversion is achieved according to the DALM algorithm, an amount of calculation in a process of iterations can be reduced by optimizing the matrix operation. The constraint condition used when the missing frequency is inverted is to keep an original frequency component of the data unchanged, so that the original frequency component can be well protected through the technology. Before the frequency inversion, the original data are filtered to suppress the abnormal-energy noise in the data, and the effective frequency damaged through the filter effect may also be continued in a process of the inversion. Thus, a signal-to-noise ratio of the data can be increased to a certain extent through the technology.

The present disclosure demonstrates that under such a particular condition, through the fast Fourier transform (FFT), a step of the matrix inversion (generally having the complexity $N^3$ ) can be omitted, and the complexity of a corresponding matrix multiplication process in each iteration can be reduced from $N^2$ to $N\log(N)$ , wherein N denotes a number of samples.

In the embodiment, FIG. 3 shows a result obtained after the missing frequency is expanded based on a fast sparse inversion frequency. It can be seen from FIG. 3(a) that an in-phase axis of the seismic data is suppressed. It can be seen from FIG. 3(b) that a treated spectrum can not only expand a higher-frequency component, but can also keep completely consistent in a range of the effective band of the original data. This is because the constraint conditions used by the technology ensure that an original frequency of the data can conform to a Fourier transform relation all the time.

By testing model data having an abnormal noise in FIG. 4 (a), it can be seen from an original data spectrum in FIG. 4(b) that input data lack lower-frequency data of 4 Hz or lower and higher-frequency data of 16 Hz or higher, and encompass the abnormal-energy noise in 9 Hz-12 Hz. After the process through the technology, it can be seed from test results shown in FIG. 5(a) and FIG. 5(b) that the missing lower-frequency component and higher-frequency component can be inverted, and the abnormal-energy noise can be well suppressed.

To test the applicability of the method, more complex model data tests are added.

FIG. 6(a) shows a simulated single-shot record. A solid line to which an arrow in FIG. 6(b) is pointed denotes a spectrum of the model data. FIG. 7(a) shows that the lower-frequency components of 5 Hz or lower in the original data are filtered out through one high-pass filter. A solid line to which an arrow in FIG. 7(b) is pointed denotes a spectrum of filtered model data. The lower-frequency data of 5 Hz or lower are continued through the technology. FIG. 8(a) shows single-shot data after frequency continuation. A solid line to which an arrow in FIG. 8(b) is pointed denotes a spectrum of frequency-continued data. It can be seen from the spectrum that a continued lower frequency is very close to a lower frequency of the original data, which verifies correctness of the technology. Through a comparison between FIG. 9(a) showing the lower-frequency components of 5 Hz or lower in the original data and FIG. 9(b) showing the lower-frequency components inverted through the technology, it can be seen that the two types of lower-frequency components are also very close in shot record, which further verifies correctness of the method.

As shown in FIG. 10, a frequency expansion apparatus based on fast sparse inversion is provided in the embodiments of the present disclosure. The apparatus includes:

a data acquisition module 10 configured to acquire pre-stack seismic data;
a data filtering module 20 configured to filter, by a pre-constructed filtering operator, the pre-stack seismic data and obtain filtered pre-stack seismic data;
a Fourier transform module 30 configured to perform Fourier transform on the filtered pre-stack seismic data and obtain transformed pre-stack seismic data;

an objective function construction module 40 configured to construct a frequency inversion objective function based on the filtered pre-stack seismic data and a sparse inversion algorithm, with the transformed pre-stack seismic data as constraint conditions; and

a frequency expansion module 50 configured to iteratively solve the frequency inversion objective function through a Lagrange multiplier method, update the filtered pre-stack seismic data until an amount of updates of updated filtered pre-stack seismic data is less than a preset update threshold or a number of iterations reaches a preset iteration threshold, and output the updated filtered pre-stack seismic data as frequency-expanded pre-stack seismic data.

An electronic device is further provided in the embodiments of the present disclosure. The electronic device includes a memory, a processor, and a computer program stored in the memory and runnable on the processor, wherein the processor, when executing the computer program, implements the above frequency expansion method based on fast sparse inversion.

A readable storage medium is further provided in the embodiments of the present disclosure. The readable storage medium stores instructions, wherein the instructions are configured to cause a machine to perform the above frequency expansion method based on fast sparse inversion.

Those skilled in the art can understand that all or some steps of the methods implementing the above embodiments can be accomplished by instructing related hardware through a program. The program is stored in one storage medium and includes several instructions configured to cause a single-chip microcomputer, a chip, or a processor to execute all or some steps of the method in each embodiment of the present disclosure. The foregoing storage medium includes various media capable of storing a program code, such as a universal serial bus (USB) flash disk, a mobile hard disk, a read-only memory (ROM), a random access memory (RAM), a magnetic disk, and an optical disk.

Those skilled in the art can clearly understand that for convenience and brevity of description, the division of the above function units or modules is merely illustratively described. In actual application, the above functions can be assigned to different function units or modules for accomplishment as demanded. To be specific, an internal structure of the apparatus is divided into different function units or modules, to complete all or some functions described above. All function units or modules in the examples can be integrated into one processing unit. Alternatively, each unit can physically exist alone. Alternatively, two or more units can be integrated into one unit. The above integrated unit can be implemented in a form of hardware or a software function unit. Also, the specific name of each function unit or module is merely for the convenience of mutual differentiation, and is not used to limit the scope of protection of the present disclosure.

The optional embodiments of the present disclosure are described in detail above with reference to the accompanying drawings. However, the embodiments of the present disclosure are not limited to specific details in the above embodiments. Various simple variations can be made to the technical solutions in the embodiments of the present disclosure within the scope of the technical concept in the embodiments of the present disclosure, and these simple variations fall within the scope of protection of the embodiments of the present disclosure. It should be further noted that various specific technical features described in the above particular embodiments can be combined in any suitable way without contradiction. To avoid unnecessary repetition, various possible combinations are not described in the embodiments of the present disclosure separately.

In addition, various different embodiments of the present disclosure can also be combined randomly without departing from the concept in the embodiments of the present disclosure. The combinations should also be deemed as contents disclosed in the embodiments of the present disclosure.

**Claims**

1.  A frequency expansion method based on fast sparse inversion, **characterized by** comprising:

    acquiring pre-stack seismic data;
    filtering, by a pre-constructed filtering operator, the pre-stack seismic data, and obtaining filtered pre-stack seismic data;
    performing Fourier transform on the filtered pre-stack seismic data, and obtaining transformed pre-stack seismic data;
    constructing a frequency inversion objective function based on the filtered pre-stack seismic data and a sparse inversion algorithm, with the transformed pre-stack seismic data as constraint conditions; and
    iteratively solving the frequency inversion objective function through a Lagrange multiplier method, updating the filtered pre-stack seismic data until an amount of updates of updated filtered pre-stack seismic data is less than a preset update threshold or a number of iterations reaches a preset iteration threshold, and outputting the updated filtered pre-stack seismic data as frequency-expanded pre-stack seismic data.

2. The frequency expansion method based on fast sparse inversion according to claim 1, **characterized in that** before the filtering, by a pre-constructed filtering operator, the pre-stack seismic data, and obtaining filtered pre-stack seismic data, the method further comprises:

   constructing the filtering operator based on an effective band of the pre-stack seismic data, a band where a noise is located, and a band to be inverted; wherein
   an expression of the filtering operator is as follows:

$$M(f) = \begin{cases} 1 & f \text{ denotes a frequency where a signal is located} \\ 0 & f \text{ denotes a frequency where a noise is located} \end{cases}.$$

3. The frequency expansion method based on fast sparse inversion according to claim 1, **characterized in that** the performing Fourier transform on the filtered pre-stack seismic data, and obtaining transformed pre-stack seismic data comprise:

   obtaining the transformed pre-stack seismic data according to a calculation formula as follows:

$$b[k] = \sum_{n=0}^{N-1} d[n] e^{-j(\frac{2\pi}{N})kn};$$

   wherein
   $b[k]$ denotes the transformed pre-stack seismic data, $d[n]$ denotes the filtered pre-stack seismic data, $n$ denotes a serial number of a seismic data sampling point in time, $j$ denotes an imaginary unit, $k$ denotes a serial number of the seismic data in a frequency domain, and $0 \leq k \leq N-1$ .

4. The frequency expansion method based on fast sparse inversion according to claim 1, **characterized in that** an L1 sparse inversion algorithm serves as the sparse inversion algorithm; and
   a dual augmented Lagrange multiplier method serves as the Lagrange multiplier method.

5. The frequency expansion method based on fast sparse inversion according to claim 1, **characterized in that** an expression of the frequency inversion objective function is as follows: $J(x) = \min_{D} \|D\|_1$ ; wherein
   $J(x)$ denotes the frequency inversion objective function, and $D$ denotes a data matrix of the filtered pre-stack seismic data.

6. The frequency expansion method based on fast sparse inversion according to claim 1, **characterized in that** the constraint conditions of the frequency inversion objective function are as follows:

$$A * D = B;$$

$$A = \begin{bmatrix} 1 & 1 & \cdots & 1 \\ 1 & e^{-j(\frac{2\pi}{N})} & \cdots & e^{-(N-1)j(\frac{2\pi}{N})} \\ \vdots & \vdots & \ddots & \vdots \\ 1 & e^{-(N-1)j(\frac{2\pi}{N})} & \cdots & e^{-(N-1)(N-1)j(\frac{2\pi}{N})} \end{bmatrix};$$

$$D = \begin{bmatrix} d[0] & d[1] & \dots & d[N-1] \end{bmatrix};$$

   and

$$B = \begin{bmatrix} b[0] & b[1] & ... & b[N-1] \end{bmatrix};$$

wherein, $A$ denotes a discrete Fourier transform matrix, $D$ denotes a data matrix of the filtered pre-stack seismic data, $B$ denotes a data matrix of the transformed pre-stack seismic data, $b[k]$ denotes the transformed pre-stack seismic data, $d[n]$ denotes the filtered pre-stack seismic data, $n$ denotes a serial number of a seismic data sampling point in time, and $j$ denotes an imaginary unit.

7. The frequency expansion method based on fast sparse inversion according to claim 1, **characterized in that** the filtered pre-stack seismic data are updated according to a formula as follows:

$$\begin{cases} D^{(m)} = D^{(m-1)} - \beta \left[ sign(u + \frac{D^{(m-1)}}{\beta}) * \min\left(1, \left| u + \frac{D^{(m-1)}}{\beta} \right| \right) - IFFT\left[ FFT\left[ sign(u + \frac{D^{(m-1)}}{\beta}) * \min\left(1, \left| u + \frac{D^{(m-1)}}{\beta} \right| \right) - \frac{D^{(m-1)}}{\beta} \right] + \frac{B}{\beta} \right] \right] \\ \beta = \alpha \cdot \frac{\|B\|_1}{O(N)} \end{cases};$$

wherein, $D^{(m)}$ denotes a data matrix of filtered pre-stack seismic data after an m-th iteration, $\beta$ denotes a sparse inversion parameter, $u$ denotes a preset vector, $D^{(m-1)}$ denotes a data matrix of filtered pre-stack seismic data after an $(m-1)$th iteration, $sign(u + \frac{D^{(m-1)}}{\beta}) * \min\left(1, \left| u + \frac{D^{(m-1)}}{\beta} \right| \right)$ denotes that all values greater than 1 in $u + \frac{D^{(m-1)}}{\beta}$ are set as 1, $IFFT()$ denotes inverse Fourier transform, $FFT()$ denotes Fourier transform, $\alpha$ denotes a fitting parameter, $\alpha < 1$, $B$ denotes a data matrix of the transformed pre-stack seismic data, $N$ denotes a latitude of the pre-stack seismic data, and $O(N)$ denotes a constant.

8. A frequency expansion apparatus based on fast sparse inversion, **characterized by** comprising:

a data acquisition module configured to acquire pre-stack seismic data;
a data filtering module configured to filter, by a pre-constructed filtering operator, the pre-stack seismic data and obtain filtered pre-stack seismic data;
a Fourier transform module configured to perform Fourier transform on the filtered pre-stack seismic data and obtain transformed pre-stack seismic data;
an objective function construction module configured to construct a frequency inversion objective function based on the filtered pre-stack seismic data and a sparse inversion algorithm, with the transformed pre-stack seismic data as constraint conditions; and
a frequency expansion module configured to iteratively solve the frequency inversion objective function through a Lagrange multiplier method, update the filtered pre-stack seismic data until an amount of updates of updated filtered pre-stack seismic data is less than a preset update threshold or
a number of iterations reaches a preset iteration threshold, and output the updated filtered pre-stack seismic data as frequency-expanded pre-stack seismic data.

9. An electronic device, comprising a memory, a processor, and a computer program stored in the memory and runnable on the processor, wherein the processor, when executing the computer program, implements the frequency expansion method based on fast sparse inversion according to any one of claims 1-7.

10. A readable storage medium, storing instructions, wherein the instructions are configured to cause a machine to perform the frequency expansion method based on fast sparse inversion according to any one of claims 1-7.

| | | |
|---|---|---|
| Acquire pre-stack seismic data | | Step 1 |
| Filter, by a pre-constructed filtering operator, the pre-stack seismic data, and obtain filtered pre-stack seismic data | | Step 2 |
| Perform Fourier transform on the filtered pre-stack seismic data, and obtain transformed pre-stack seismic data | | Step 3 |
| Construct a frequency inversion objective function based on the filtered pre-stack seismic data and a sparse inversion algorithm, with the transformed pre-stack seismic data as constraint conditions | | Step 4 |
| Iteratively solve the frequency inversion objective function through a Lagrange multiplier method, update the filtered pre-stack seismic data until an amount of updates of updated filtered pre-stack seismic data is less than a preset update threshold or a number of iterations reaches a preset iteration threshold, and output the updated filtered pre-stack seismic data as frequency-expanded pre-stack seismic data | | Step 5 |

FIG. 1

(a)                                                    (b)

FIG. 2

FIG. 3

FIG. 4

FIG. 5

(a)                                    (b)

FIG. 6

(a)                                    (b)

FIG. 7

(a)                                    (b)

FIG. 8

(a)

(b)

FIG. 9

FIG. 10

## INTERNATIONAL SEARCH REPORT

| International application No. |
|---|
| **PCT/CN2023/138598** |

| A. | CLASSIFICATION OF SUBJECT MATTER |
|---|---|

G01V1/36(2006.01)i; G01V1/30(2006.01)i

According to International Patent Classification (IPC) or to both national classification and IPC

| B. | FIELDS SEARCHED |
|---|---|

Minimum documentation searched (classification system followed by classification symbols)

IPC: G01V

Documentation searched other than minimum documentation to the extent that such documents are included in the fields searched

Electronic data base consulted during the international search (name of data base and, where practicable, search terms used)

CNABS: CNTXT; CNKI; VEN; USTXT; WOTXT; EPTXT; IEEE: 迭代, 叠前, 阀值, 反演, 傅里叶, 更新, 拉格朗日, 滤波, 目标函数, 频率, 拓频, 稀疏, 延, 阈值, frequency, inversion, sparse, stack, spread+, expand+, filter+, extend+, Fourier

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 104007469 A (YANGTZE UNIVERSITY) 27 August 2014 (2014-08-27) description, paragraphs [0009]-[0053] | 1-10 |
| A | CN 106154323 A (CHINA PETROLEUM & CHEMICAL CORP. et al.) 23 November 2016 (2016-11-23) entire document | 1-10 |
| A | CN 111474576 A (CHINA NATIONAL OFFSHORE OIL CORP. et al.) 31 July 2020 (2020-07-31) entire document | 1-10 |
| A | JP 2006238195 A (SANYO ELECTRIC CO., LTD.) 07 September 2006 (2006-09-07) entire document | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 June 2024** | **16 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/138598**

| Patent document cited in search report | | | Publication date (day/month/year) | Patent family member(s) | Publication date (day/month/year) |
|---|---|---|---|---|---|
| CN | 104007469 | A | 27 August 2014 | None | |
| CN | 106154323 | A | 23 November 2016 | None | |
| CN | 111474576 | A | 31 July 2020 | None | |
| JP | 2006238195 | A | 07 September 2006 | None | |

Form PCT/ISA/210 (patent family annex) (July 2022)